(19) Europäisches Patentamt
European Patent Office
Office européen des brevets

(11) **EP 2 638 572 B1**

(12) **FASCICULE DE BREVET EUROPEEN**

(45) Date de publication et mention de la délivrance du brevet:
**08.04.2015 Bulletin 2015/15**

(51) Int Cl.:
*H01L 25/03* [(2006.01)]    *H02M 7/08* [(2006.01)]
*H02M 7/00* [(2006.01)]

(21) Numéro de dépôt: **11779657.3**

(22) Date de dépôt: **07.11.2011**

(86) Numéro de dépôt international:
**PCT/EP2011/069557**

(87) Numéro de publication internationale:
**WO 2012/062707 (18.05.2012 Gazette 2012/20)**

(54) **ARCHITECTURE DE REDRESSEUR A DIODES/THYRISTORS COMPACTE PERMETTANT UNE GRANDE PUISSANCE**

AUFBAU EINES KOMPAKTEN DIODEN-/THYRISTORGLEICHRICHTERS FÜR HOHE LEISTUNGEN

COMPACT DIODE/THYRISTOR RECTIFIER ARCHITECTURE ALLOWING HIGH POWER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.11.2010 FR 1059313**

(43) Date de publication de la demande:
**18.09.2013 Bulletin 2013/38**

(73) Titulaire: **ALSTOM Technology Ltd**
**5400 Baden (CH)**

(72) Inventeurs:
• **MARIADASSOU, Prithu**
 **F-75014 Paris (FR)**
• **DEVAUTOUR, Joel**
 **F-78230 Le Pecq (FR)**

(74) Mandataire: **Ilgart, Jean-Christophe et al**
**BREVALEX**
**95, rue d'Amsterdam**
**75378 Paris Cedex 8 (FR)**

(56) Documents cités:
**GB-A- 1 245 741**

• **J-L SCHANEN ET AL: "Impact of the Physical Layout of High-Current Rectifiers on Current Division and Magnetic Field Using PEEC Method", IEEE TRANSACTIONS ON INDUSTRY APPLICATIONS, IEEE SERVICE CENTER, PISCATAWAY, NJ, US, vol. 46, no. 2, 1 mars 2010 (2010-03-01), pages 892-900, XP011301038, ISSN: 0093-9994**
• **SYED M PEERAN ET AL: "Current Balance in Parallel Power Diodes in Three-Phase Rectifiers", IEEE TRANSACTIONS ON INDUSTRY APPLICATIONS, IEEE SERVICE CENTER, PISCATAWAY, NJ, US, vol. 43, no. 3, 1 mai 1987 (1987-05-01), pages 567-572, XP011213791, ISSN: 0093-9994**

**Description**

**DOMAINE TECHNIQUE**

La présente invention est relative au domaine des redresseurs de puissance de forte intensité et/ou haute ou moyenne tension.

Ce domaine couvre des redresseurs pouvant délivrer des courants continus allant jusqu'à 110 kA et des tensions continues pouvant dépasser 2200 V.

L'invention se rapporte à l'architecture des redresseurs de forte puissance, de l'ordre d'une centaine de MVA, utilisés pour l'alimentation électrique en courant continu de procédés électro-intensifs nécessitant des alimentations continues de forte puissance. On peut ainsi utiliser l'invention pour alimenter des usines d'électrolyse d'aluminium ou d'électrolyse de métaux non ferreux (cuivre, zinc, Chlore). On peut aussi utiliser l'invention pour alimenter d'autres procédés électro-intensifs nécessitant des alimentations continues de forte puissance tels que des fours à arc à courant continu.

Dans la suite de la description il sera pris comme exemple particulier l'utilisation de tels redresseurs pour l'alimentation d'une usine d'électrolyse.

**ÉTAT DE LA TECHNIQUE ANTÉRIEURE**

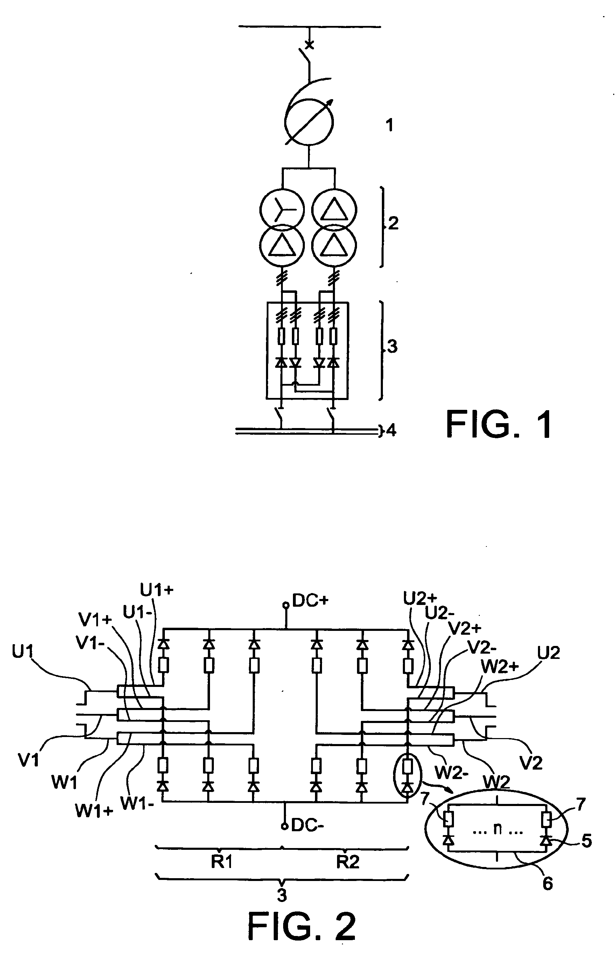

Une alimentation électrique pour une usine d'électrolyse est constituée d'une mise en parallèle de plusieurs sources d'alimentation appelées communément groupes. Le principe de fonctionnement d'un groupe d'alimentation est illustré en figure 1. Ce groupe d'alimentation est constitué principalement :

d'un transformateur de réglage 1 permettant d'ajuster une tension de réseau à une tension intermédiaire,

d'un transformateur dit transformateur redresseur 2 permettant d'ajuster la tension intermédiaire à une tension hors charge adéquate dépendant de la valeur de la tension de charge induite par l'usine à alimenter et de délivrer les fortes intensités nécessaires au procédé d'électrolyse

d'un redresseur 3 à composants semiconducteurs (diodes ou thyristors) permettant de délivrer un courant et une tension redressés continus à la charge,

d'un jeu de barres de puissance 4 permettant la mise en parallèle des différents groupes d'alimentation.

La figure 2 montre un exemple de réalisation d'un redresseur 3 à diode dodécaphasé, de type double pont de Graëtz. C'est-à-dire que le convertisseur redresseur regroupe deux structures à pont de Graëtz R1 et R2, chacune reliée à un transformateur parmi un premier transformateur triphasé T1, et un second transformateur triphasé T2. Chaque transformateur triphasé T1, T2 comporte trois phases, U1, V1 et W1 pour le premier transformateur triphasé T1 et U2, V2 et W2 pour le second transformateur triphasé T2. Chaque transformateur triphasé alimente un pont de Graëtz triphasé. Chaque pont de Graëtz triphasé fonctionne comme un pont de Graëtz monophasé comportant trois bornes alimentées en courant alternatif, dites bornes AC, et deux bornes dégageant un courant continu. Un pont de Graëtz triphasé permet de sortir un courant comportant une périodicité valant un sixième d'une périodicité initiale du transformateur triphasé. Chaque phase U1, V1, W1 et U2, V2, W2 est reliée au pont de Graëtz au moyen d'une des bornes AC précitées. Par esprit de simplification les bornes AC et les phases ont les mêmes références.

Sur la figure 1, les deux bornes AC d'une même phase sont représentée liées pour simplifier la lecture du schéma.

Les deux ponts de Graëtz triphasés sont reliés en deux bornes DC communes, une borne DC positive DC+, et une borne DC négative DC-. Ces bornes DC permettent de délivrer un courant et une tension continus à l'usine à alimenter.

Chaque pont de Graëtz (R1, R2) comporte six bras dits bras redresseur U1+, U1-, V1+, V1-, W1+, W1-, U2+, U2-, V2+, V2-, W2+, W2-, agencés de façon à relier chaque phase U1, V1, W1 et U2, V2, W2 à chacune des deux bornes DC (DC+, DC-). Ainsi, chaque bras redresseur d'un pont de Graëtz est monté entre une borne AC et une borne DC.

Chaque bras redresseur U1+, U1-, V1+, V1-, W1+, W1-, U2+, U2-, V2+, V2-, W2+, W2-, est lui-même formé d'une mise en parallèle de n composants électronique monodirectionnels 5, par exemple des diodes ou des thyristors. Les composants électroniques monodirectionnels sont appelés ainsi en ce qu'ils ne laissent passer le courant que dans un seul sens et bloquent le courant venant en sens inverse. Dans la suite on dira « composant monodirectionnel 5 » pour définir de façon indifférente une diode, un thyristor ou un autre composant électronique monodirectionnel.

On procède à cette mise en parallèle de composants afin d'obtenir un élément fonctionnant comme une diode tout en ayant un calibre suffisant pour redresser la puissance traversant le redresseur 3. Les n composants monodirectionnels 5 sont traditionnellement reliés électriquement d'un côté à une même structure conductrice, dite barre composant 6, qui permet de transmettre un courant entre les composants monodirectionnels 5 et la borne DC.

Chaque composant monodirectionnel 5 est de préférence relié en série de l'autre côté avec une résistance fusible, dite fusible 7. Les fusibles servent à couper un courant de défaillance circulant à travers un composant monodirectionnel 5 défaillant, protégeant ainsi le bras redresseur. Un tel composant monodirectionnel défaillant laisse passer du courant en sens inverse de celui normalement accepté par le composant monodirectionnel 5. Cela limiterait l'intérêt du bras redresseur. Si un seul composant monodirectionnel est défaillant un courant circule en sens inverse dans ledit composant monodirectionnel défaillant et dans le fusible qui lui est adjoint avec une puissance correspondant à toute la puissance du transformateur. Cette puissance détruit le fusible 7, ce qui coupe la liaison électrique passant par le composant monodirectionnel 5 défectueux. Le courant passant en sens inverse est alors coupé. Le composant monodirectionnel 5 défectueux est mis hors circuit et, bien que le défaut soit apparu, on obtient un bras redresseur fonctionnel, avec un composant monodirectionnel 5 en moins.

Lorsque l'on désire augmenter la puissance circulant dans le redresseur 3, il est nécessaire d'augmenter la tension ou l'intensité.

Lorsqu'on augmente la valeur de la tension redressée, (pour atteindre des valeurs typiques de 2200 Vdc) il est nécessaire d'utiliser des diodes ou des thyristors 5 ayant une forte tenue en tension inverse. Cependant, la technologie des composants électroniques actuels ne permet pas d'avoir des diodes ou des thyristors 5 avec des calibres de courant élevé. Il est nécessaire de positionner, comme décrit plus haut, de multiples composants monodirectionnels 5 montés en parallèle. Si l'on désire augmenter l'intensité du courant redressé, on doit aussi augmenter le nombre de composants monodirectionnels 5 montés en parallèle. Ainsi, pour un redresseur 2200 Vdc/100 kA, il est nécessaire de mettre entre 18 et 20 diodes ou thyristors en parallèle par bras redresseur suivant le type de composant électronique utilisé et les conditions de fonctionnement.

De plus, il est très difficile d'avoir des fusibles 7 de très fort calibre en courant lorsqu'on augmente la tension redressée. Ceci conduit à une limitation du courant élémentaire pouvant traverser chaque fusible 7. Il est alors nécessaire de limiter le courant passant dans chaque composant monodirectionnel 5 et cela induit une augmentation du nombre de groupes fonctionnels composant/fusible montés en parallèle.

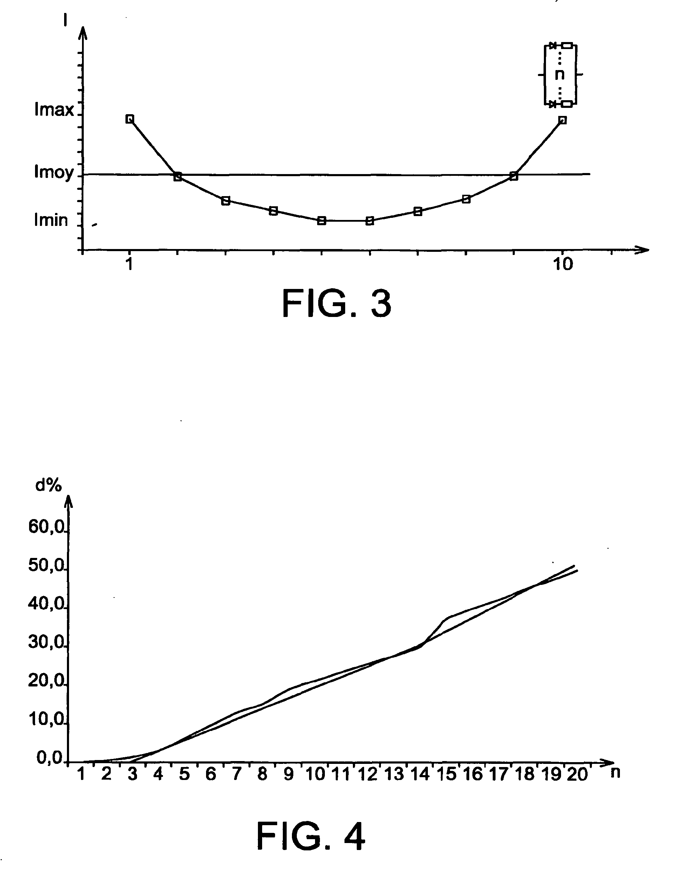

Une telle mise en parallèle des composants pose des problèmes d'équilibrage du courant entre les composants monodirectionnels 5 d'un même bras redresseur. La figure 3 donne un exemple de répartition de courant pour un bras redresseur comportant n diodes dans le cadre d'une réalisation typique.

En abscisse est reporté un numéro d'ordre attribué à chacune des diodes présentes sur un bras redresseur en partant d'une des extrémités d'une barre composant. En ordonnée est représentée une valeur de courant I porté par chaque diode.

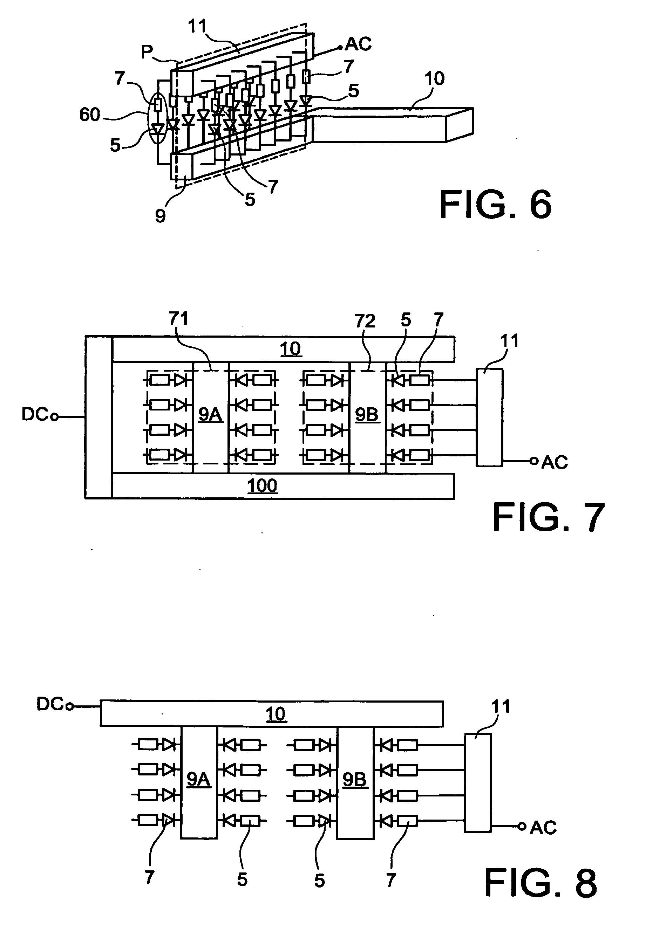

On observe qu'une des diodes est moins chargée que les autres et est traversée par un courant Imin, et qu'au moins une autre diode est plus chargée que les autres et est traversée par un courant Imax. Un courant moyen Imoy est donné par le courant total traversant le bras redresseur divisé par le nombre n de composants monodirectionnels 5 en parallèle. On s'aperçoit que ce sont les diodes d'extrémité, situées aux extrémités des barres composant, qui sont les plus chargées en courant. Cela peut s'expliquer par la géométrie du montage mais également par la répartition du champ magnétique comme on l'expliquera plus loin en liaison avec la figure 7.

On définit un pourcentage de déséquilibre d% par la formule suivante :

$$d\% = \text{Max} \left( |Imax /Imoy-1| \; ; \; |Imin/Imoy-1| \right).$$

Du fait de ce déséquilibre entre les diodes les moins chargées et les plus chargées en courant du bras redresseur, il est nécessaire de dimensionner l'ensemble des composants d'un bras redresseur pour qu'ils puissent supporter une intensité de valeur Imax, bien que peu de composants aient réellement besoin de faire passer une telle intensité.

La figure 4 donne quelques valeurs typiques de déséquilibre d% obtenues sur des structures actuelles en fonction d'un nombre n de diodes présentes sur la barre composant du bras redresseur. La valeur de d% dépend principalement de la structure mécanique du redresseur.

On observe que la valeur du déséquilibre d% croît très vite avec le nombre n de composants en parallèle. Ce qui induit de très grandes variations de courant d'une diode à l'autre.

Quand on veut redresser une forte puissance, il faut ajouter des composants monodirectionnels 5 en parallèle. Cela augmente le déséquilibre. En conséquence, la valeur de courant moyen Imoy passant à travers les composants monodirectionnels 5 diminue. Il devient nécessaire d'ajouter encore des composants monodirectionnels 5 en parallèle afin de composer avec la valeur réduite de Imoy, ce qui accentue encore le déséquilibre.

Finalement, au-delà d'une certaine valeur de courant, les structures actuelles de redresseur ont un nombre n de composants monodirectionnels 5 à mettre en parallèle qui conduit à un déséquilibre prohibitif.

Or, il est fréquent que les utilisateurs de ce type de redresseur 3 imposent un déséquilibre d% maximal à ne pas dépasser dans les redresseurs. Ce critère de déséquilibre est un critère d'acceptation de l'équipement.

Si l'on veut proposer des équipements capables de délivrer des puissances importantes, il devient nécessaire de créer des architectures de redresseur permettant dans chaque bras redresseur une mise en parallèle d'un nombre n important de diodes ou de thyristors tout en présentant un déséquilibre limité, typiquement 30%.

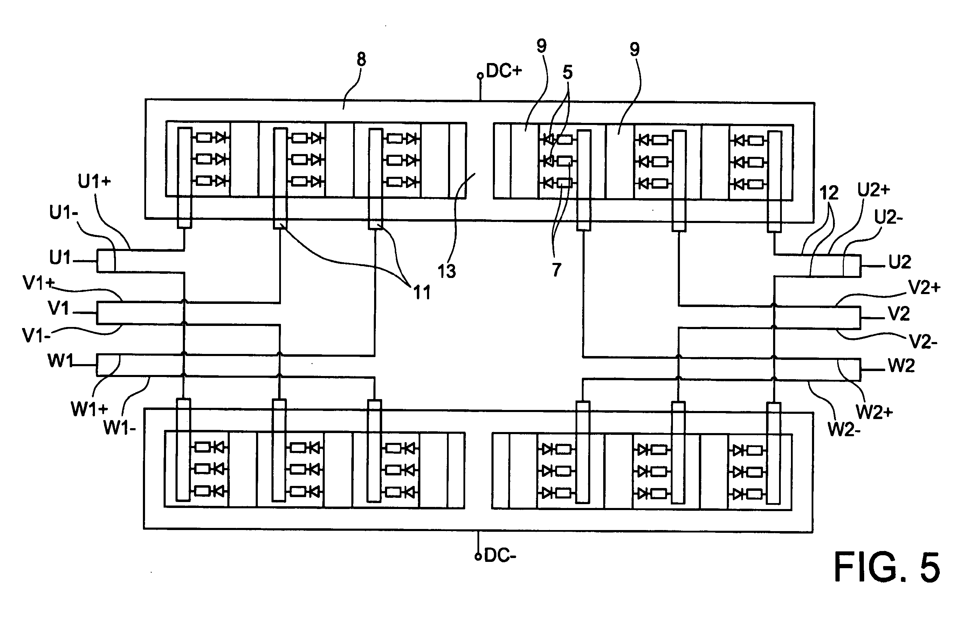

Selon l'état de la technique, pour la mise en parallèle, les composants monodirectionnels 5 d'un bras redresseur sont généralement reliés à la borne DC via un cadre 8 en aluminium ou en cuivre (figure 5). Il existe dans l'état de l'art actuel différentes manières de réaliser ce cadre 8, l'objectif étant d'équilibrer la distribution des impédances entre les différents composants monodirectionnels 5 et la borne DC. La figure 5 illustre de façon structurelle un double pont de Graëtz où chaque pont de Graëtz redresse 3 phases U1, V1, W1 et U2, V2, W2 alimentées en courant alternatif. En sortie, le double pont de Graëtz fournit en deux bornes DC, DC+ et DC-, un courant continu.

Les composants monodirectionnels 5 d'un bras redresseur sont reliés d'un côté à une barre conductrice, en aluminium ou en cuivre, refroidie à l'eau, appelée communément barre composant 9. Le courant I circulant dans les différents bras redresseurs est collecté par une ou plusieurs barres conductrices, appelées barres collectrices 10, faisant partie du cadre 8 précité et perpendiculaires aux barres composant 9. Chaque extrémité d'une barre composant 9 est reliée à une barre collectrice 10. Les barres collectrices 10 forment alors deux côtés opposés du cadre 8 et relient les barres composant 9 à une borne DC (DC+ ou DC-) du redresseur.

Une résistance fusible 7 est reliée à un côté de chaque composant monodirectionnel 5, le composant monodirectionnel 5 étant en série entre la résistance fusible 7 et la barre collectrice 10. Les résistances fusibles 7 sont portés par une barre conductrice, appelée barre fusible 11, en cuivre ou en aluminium, refroidie à l'eau. Il y a une barre fusible 11 par bras redresseur. La barre fusible 11 relie les composants monodirectionnels 5, par l'intermédiaire des résistances fusibles 7 à une borne AC correspondante du redresseur. Un composant monodirectionnel 5 et la résistance fusible 7 associée forment un groupe fonctionnel.

Un courant traversant un bras redresseur G traverse donc, en partant d'une borne AC U1, V1, W1, U2, V2, W2 :

- un câble conducteur 12,
- une barre fusible 11, (dans laquelle le courant se répartit entre les différents groupes fonctionnels),
- un fusible 7,
- un composant monodirectionnel 5 (diode ou thyristor), en série avec le fusible 7,
- une barre composant 9, (dans laquelle le courant des différents groupes fonctionnels est rassemblé).

Ensuite, le courant quitte le bras redresseur et atteint les barres collectrices 10 du cadre 8 et se regroupe avec du courant issu des autres phases (U1, V1, W1, U2, V2, W2), jusqu'à rejoindre une borne DC à laquelle est relié le cadre 8.

Les barres composant 9 et les barres fusible 11 ont plusieurs faces. Les composants monodirectionnels 5 et les fusibles 7 sont généralement reliés à deux faces opposées des barres composant 9 et des barres fusible 11 (figure 6). La figure 6 illustre ce principe dans un schéma en perspective. On y voit représenté une barre fusible 11 reliée par une extrémité à une borne AC et une barre composant 9 reliée par une extrémité à une barre collectrice 10. Enfin, il est représenté de multiples groupes fonctionnels 60 comportant chacun un fusible 7 en série avec un composant monodirectionnel 5. Les groupes fonctionnels 60 ne sont pas positionnés directement entre la barre fusible 11 et la barre composant 9. Un tel positionnement conduirait à un encombrement entre les deux barres 9, 11.

De façon à désencombrer la structure, les groupes fonctionnels 60 sont séparés en deux ensembles reliés aux deux barres 9, 10 des deux côtés d'un plan P passant par les deux barres.

Actuellement, il existe dans le commerce des redresseurs comportant jusqu'à 14 diodes ou thyristors en parallèle par bras redresseur.

Il est également connu dans l'état de l'art de disposer au moins une barre intermédiaire 13 appelée en anglais « commutation busbar » dont les avantages sont décrits comme permettant d'obtenir un meilleur équilibre dans le document d'ABB « 100 kA conversion units for highly efficient aluminium smelters », reprint from aluminium 2004/3, p4. La barre intermédiaire 13 est positionnée au niveau du cadre 8 relié à la borne DC. Elle relie deux barres collectrices situées chacune à une extrémité d'une barre composant. La barre intermédiaire est située entre deux barres composant et s'ajoute ainsi à des barres conductrices qui sont situées aux extrémités des barres collectrices.

L'auteur du document précité indique atteindre un déséquilibre d% supérieur à 22% pour un nombre n de diodes ou thyristors égal à 14.

Les structures précitées, connues de l'état de la technique, ne sont pas satisfaisantes du fait qu'il n'est guère possible d'aller au-delà de 16 ou 18 composants en parallèle sans avoir un déséquilibre devenant prohibitif.

On comprend donc qu'il est important, pour permettre une conversion de courants ou tension ayant une grande puissance de pouvoir augmenter le nombre de groupes fonctionnels en parallèle. Cependant, par la même occasion il est important de limiter l'importance du déséquilibre.

## EXPOSÉ DE L'INVENTION

L'invention concerne ici principalement l'architecture du redresseur de façon à permettre de mettre un nombre important de composants en parallèle tout en ne dépassant pas cette valeur de déséquilibre maximal imposée par les utilisateurs. L'invention vise typiquement à mettre 20, 24 ou plus composants en parallèle avec un déséquilibre maximal compris entre 20% et 30%.

L'invention propose de créer au moins deux ensembles de groupes fonctionnels en parallèle par phase. D'un point de vue mécanique, cela consiste à dédoubler chaque barre composant et chaque barre fusible en au moins deux barres composant et deux barres fusible mises en parallèle.

La nouvelle architecture proposée a pour objectif de répondre à la problématique d'augmentation de la puissance à délivrer par le redresseur.

L'invention concerne donc un convertisseur redresseur à pont de Graëtz comportant des bornes alimentées en courant alternatif, dites bornes AC et deux bornes aptes à alimenter en courant continu un circuit extérieur, dites bornes DC, et des bras redresseurs reliant chaque borne AC à chaque borne DC. Chaque bras redresseur est situé entre une unique borne AC et une unique borne DC et il comporte de multiples composants électroniques monodirectionnels, dits composants monodirectionnels, montés en parallèle. Les composants monodirectionnels sont reliés d'un côté à la borne DC au moyen d'un ensemble conducteur, dit ensemble composant, et d'un autre côté à la borne AC.

L'invention est caractérisée en ce que pour au moins un bras redresseur, l'ensemble composant comporte plusieurs barres conductrices, dites barres composant, ayant chacune au moins une extrémité reliée à la borne DC. Les composants monodirectionnels sont reliés aux barres composant et répartis entre elles en autant d'ensembles de composants montés en parallèle qu'il y a de barres composant. On comprend donc qu'il y a au moins deux barres composant par bras redresseur.

Ainsi, selon l'invention, le déséquilibre est circonscrit à chaque groupe de composant. Un redresseur selon l'invention comporte donc au moins deux ensembles de composants ayant chacun un déséquilibre sur n composants monodirectionnels. Chaque ensemble de composant peut donc être équilibré indépendamment de l'autre ensemble de composants. Il est ensuite nécessaire d'équilibrer les deux ensembles de composants entre eux, de manière globale.

Un tel montage réduit le déséquilibre total du bras redresseur, à deux barres composant, comparé à un bras redresseur selon l'état de la technique comportant 2n composants monodirectionnels. En effet, selon l'invention, chaque barre composant ne comporte que n composants monodirectionnels. Le déséquilibre à corriger pour chaque barre composant est alors de l'ordre d'un déséquilibre à n composants monodirectionnels au lieu d'un déséquilibre à 2n composants monodirectionnels. S'il y a plus de deux barres composant, on comprend bien que le déséquilibre dans chaque barre composant est réduit d'autant par rapport à une construction selon l'état de la technique.

Dans le cas de la mise en parallèle d'un nombre de composants important, par exemple 20, sur deux barres composant, l'invention permet de réduire le déséquilibre de près d'un facteur 2.

Les simulations effectuées montrent les résultats suivants :

structure selon l'état de la technique avec n=20 : 50% de déséquilibre.
structure selon l'invention avec n=20 : de 20 à 25% de déséquilibre.

Un convertisseur redresseur selon l'invention est plus performant que l'état de la technique car le remplacement d'une unique barre composant par plusieurs barres composant introduit un degré supplémentaire de manoeuvre pour procéder à l'équilibrage. En créant pour chaque phase du transformateur de redresseur un nombre k d'ensembles de n/k composants monodirectionnels en parallèle, avec k au moins égal à 2, la problématique d'équilibrage se réduit non plus à équilibrer les n composants de chaque phase entre eux, mais à équilibrer d'une part chacun des k ensembles de n/k composants indépendamment des autres et d'autre part à équilibrer les k ensembles entre eux.

Un convertisseur redresseur selon l'invention est de plus beaucoup plus compact en terme de volume que les solutions connues actuellement, ceci résulte du fait que la barre composant et la barre fusible ont une longueur divisée par deux, trois ou quatre ou plus comparé à l'état de la technique.

Ainsi, l'invention permet de redresser des puissances plus importantes que selon l'état de la technique sans pour autant introduire un déséquilibre trop fort.

L'invention concerne aussi un bras redresseur dans lequel la liaison entre les composants monodirectionnels et la borne AC se fait par un ensemble fusible. L'ensemble fusible comporte une résistance fusible, dite fusible, par composant monodirectionnel, reliée d'un côté en série avec ledit composant monodirectionnel et de l'autre côté à au moins une barre fusible raccordée à la borne AC. Dit autrement, l'ensemble fusible comporte au moins une barre fusible et des résistances fusibles aptes à se comporter comme des fusibles. Les fusibles sont montés en parallèle entre eux tel que chaque composant monodirectionnel soit en série avec un fusible qui lui est propre, formant un groupe fonctionnel. De même que les composants monodirectionnels sont en parallèle, les groupes fonctionnels sont en parallèle entre eux.

Selon l'invention, le bras redresseur comporte plusieurs barres composant distinctes. Il peut par exemple y avoir deux, trois, quatre barres composant ou plus. Plus il y a de barres composant distinctes, plus on peut assembler en parallèle un nombre élevé de composants monodirectionnels tout en gardant par barre composant un faible déséquilibre. Il faut cependant prendre en compte la difficulté supplémentaire de devoir équilibrer les barres composant entre elles. Les composants assignés à une même barre composant sont de préférence reliés à une même barre fusible.

Un bras redresseur selon l'invention peut être tel que l'ensemble fusible comporte au moins une barre fusible par barre composant. Chaque barre fusible est reliée électriquement aux composants assignés à une unique barre composant. Les barres fusible sont reliées entre elles par une barre conductrice dite barre de répartition. Cela permet d'avoir une meilleure répartition de résistances entre les différents groupes fonctionnels d'un bras redresseur.

Pour chaque barre composant, il est avantageux que les composants monodirectionnels soient répartis en deux groupes, positionnés chacun d'un côté opposé de la barre composant. Comme dans l'état de la technique, cet agencement permet de réduire les différences structurelles entre les différents composants monodirectionnels et permet de réduire le déséquilibre.

Un convertisseur redresseur à pont de Graëtz comporte de préférence une barre collectrice qui relie la borne DC à des barres composant distinctes liées à plusieurs bornes AC. Dit autrement, la barre collectrice d'une borne DC relie la borne DC aux bras redresseurs issus des différentes bornes AC. La barre collectrice est de préférence fixée à une extrémité des barres composant.

Il peut y avoir plusieurs barres collectrices reliées chacune à une extrémité d'au moins une barre composant et assemblées entre elles de façon à former un cadre relié à la borne DC. Cela permet de mieux transporter le courant entre les composants monodirectionnels et la borne DC. En effet, il y a plus de chemins de conduction entre la borne DC et chaque composant monodirectionnel.

Dans un mode de réalisation de l'invention, les barres composant distinctes sont situées d'un même côté de la barre collectrice.

Inversement, les barres composant sont situées de part et d'autre d'une barre collectrice dite barre collectrice centrale, elles sont reliées par une extrémité à cette barre collectrice. Dans ce cas, deux barres composant sont décalées l'une par rapport à l'autre au niveau de leur liaison à la barre collectrice.

De façon avantageuse, les barres composant sont reliées électriquement entre elles, par une extrémité, à une même barre de liaison, cette barre de liaison étant reliée à une barre collectrice par l'intermédiaire d'un conducteur. Le conducteur écarte la barre collectrice par rapport à la barre de liaison.

Pour améliorer l'équilibrage des composants, il est préférable que le conducteur soit relié sensiblement au milieu de la barre de liaison. Pour améliorer la compacité du convertisseur redresseur, il est préférable que les barres composant soient placées sensiblement dans un même plan et que le conducteur et la barre collectrice à laquelle il est relié soient disposés sensiblement dans un même autre plan, les deux plans étant sensiblement perpendiculaires.

Lorsque l'invention traite d'un convertisseur redresseur multiphasé à pont de Graëtz, chaque transformateur étant relié par des bornes AC à un pont de Graëtz qui lui est propre. De plus, les ponts de Graëtz des différents transformateurs ayant chacun une borne DC positive et une borne DC négative reliées à un circuit à alimenter en courant continu, les ponts de Graëtz ont leurs bornes DC positives communes et leurs bornes DC négatives communes. Si les transformateurs sont des transformateurs triphasés, les ponts de Graëtz sont des ponts de Graëtz triphasés.

## BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :

La figure 1 est un schéma électrique simplifié d'une architecture d'alimentation d'usine en courant continu (Etat de la technique),
la figure 2 est un schéma électrique d'un redresseur à pont de Graëtz comportant en entrée trois phases alimentées en courant alternatif (Etat de la technique),
la figure 3 est un graphique représentant le courant traversant un composant en fonction de sa position sur une barre composant (Etat de la technique),
la figure 4 est un graphique illustrant l'évolution du déséquilibre entre les composants en fonction du nombre de composants présents sur une même barre composant (Etat de la technique),
la figure 5 illustre un pont de Graëtz redresseur détaillant, de façon simplifiée, la structure des bras redresseur au niveau des barres composant et des barres fusible (Etat de la technique),
la figure 6 illustre en perspectives un arrangement de groupes fonctionnels par rapport à une barre composant, une barre fusible et une barre collectrice,
la figure 7 illustre de façon simplifiée, la structure des bras redresseur au niveau des barres composant et des barres fusible, et l'agencement des barres composant par rapport à des barres collectrices, selon un premier mode de réalisation de l'invention,

la figure 8 est une variante de la figure 7 avec une seule barre collectrice,

les figures 9A et 9B illustrent de façon simplifiée, la structure des bras redresseur au niveau des barres composant et des barres fusible selon un autre mode de réalisation de l'invention,

les figures 10A et 10B illustrent de façon simplifiée, la structure des bras redresseur au niveau des barres composant et des barres fusible selon l'invention, dans laquelle les barres composant sont reliées entre elles à l'aide d'une barre de liaison, fixée à une barre collectrice, la barre collectrice étant écartée par rapport à la barre de liaison,

la figure 11 illustre un troisième mode de réalisation de l'invention, dans lequel il y a autant de barres fusible 11A, 11B que de barres composant,

la figure 12 illustre un mode de réalisation de l'invention comportant plus de deux barres composant.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les figures illustratives des différents modes de réalisation du dispositif selon l'invention sont données à titre d'exemple et ne sont pas limitatives.

## EXPOSÉ DÉTAILLÉ DE MODES DE RÉALISATION PARTICULIERS

En premier lieu, l'invention concerne un bras redresseur de pont de Graëtz triphasé destiné à être inclus dans un convertisseur/redresseur. Le bras redresseur sera dans la suite décrit en tant que tel ou tel qu'il peut être trouvé lorsqu'il est inclus dans le convertisseur/redresseur. De façon générale, les figures 7 à 12, illustrant l'invention, sont des schémas d'un unique bras redresseur selon l'invention et non du convertisseur redresseur dans son ensemble.

Ainsi qu'il l'est illustré en figure 2, un redresseur à pont de Graëtz triphasé R1, R2 est formé de six bras redresseurs reliant chacune des deux bornes AC de chacune des trois phases U1, V1 et W1 ou U2, V2 et W2, alimentées en courant alternatif, à deux bornes DC d'un circuit électrique à alimenter en courant continu. Le pont de Graëtz triphasé a donc une borne DC positive DC+, vue avec une polarité positive par le circuit électrique, et une borne DC négative DC-, vue avec une polarité négative par le circuit électrique. Chaque phase U1, V1, W1, U2, V2, W2 comporte deux bras redresseur U1+, U1-, V1+, V1-, W1+, W1-, U2+, U2-, V2+, V2-, W2+, W2-, G2 reliant une borne AC d'une phase et une des deux bornes DC.

Chaque bras redresseur U1+, U1-, V1+, V1-, W1+, W1-, U2+, U2-, V2+, V2-, W2+, W2- comporte un ensemble de composants électroniques ne laissant passer le courant que dans un seul sens. On dira alors que ce sont des composants monodirectionnels. Les bras redresseurs U1+, U1-, V1+, V1-, W1+, W1-, U2+, U2-, V2+, V2-, W2+, W2- sont agencés afin que leur conjugaison produise, à partir d'un courant alternatif fourni aux bornes AC, un courant continu aux bornes DC.

L'ensemble de composants électroniques monodirectionnels d'un bras redresseur comporte en particulier un nombre n donné de diode ou de thyristors montés en parallèle. Dans la suite de la description, le terme « composants monodirectionnels 5 » sera utilisé pour décrire de façon indifférente des diodes, des thyristors ou tout autre composant électronique monodirectionnel.

De façon à limiter le déséquilibre qui se forme lorsqu'on monte beaucoup de composants monodirectionnels 5 en parallèle sur une même barre composant 9, les inventeurs proposent d'utiliser, pour chaque bras redresseur U1+, U1-, V1+, V1-, W1+, W1-, U2+, U2-, V2+, V2-, W2+, W2-, au moins deux barres composant 9A, 9B au lieu d'une seule (figure 7). En répartissant les composants monodirectionnels 5 sur deux barres composant 9A, 9B au lieu d'une seule, il y a deux fois moins de composant monodirectionnel 5 à équilibrer par barre composant 9A, 9B. Il est ensuite aisé d'équilibrer les barres composant 9A, 9B entre elles.

Chaque barre composant 9A, 9B peut avoir une extrémité reliée à une barre collectrice 10 et l'autre extrémité reliée à une autre barre collectrice 100, les deux barres collectrices 10, 100 étant reliées entre elles et à une même borne DC.

Selon l'invention, chaque barre collectrice 10, 100 est alors reliée à au moins deux barres composant 9A, 9B dudit bras redresseur. C'est-à-dire que les composants monodirectionnels 5, montés en parallèle sur un même bras redresseur, sont tels que certains sont reliés à une barre composant 9A donnée et d'autres à une autre barre composant 9B distincte formant ainsi au moins deux ensembles de composants 71, 72. Les deux barres composant 9A, 9B sont elles même reliées à une ou plusieurs barres collectrices 10, 100 de façon à ce que les ensembles de composants 71, 72 soient montés en parallèle l'un avec l'autre.

Les barres collectrices 10, 100 sont généralement communes aux trois bras redresseurs d'un même pont de Graëtz triphasé reliant les bornes AC d'un même transformateur à une même borne DC. Elles sont aussi généralement communes aux bras redresseurs des différents transformateurs dans le cas d'un convertisseur-redresseur multitransformateur, par exemple dans le cas illustré en figure 5 qui représente un convertisseur dodécaphasé mettant en parallèle deux ponts de Graëtz triphasés.

La figure 7 illustre la barre fusible 11 et les fusibles 7 reliés aux composants monodirectionnels 5. Bien que seuls les fusibles 7 situés les plus à droite sur la figure soient représentés comme reliés à la barre fusible 11, il faut comprendre, ainsi que pour toutes les figures suivantes, que tous les fusibles 7 sont reliés à la barre fusible 11.

D'un point de vue électrique, les composants monodirectionnels 5 sont agencés de la même façon les uns par rapport aux autres que dans l'état de la technique. Cependant, d'un point de vue structurel, les composants monodirectionnels 5 ne sont pas attachés à une unique barre composant reliée à une ou plusieurs barres collectrices 10, 100 en ses extrémités, mais à au moins deux barres composant indépendantes 9A, 9B, reliées électriquement par au moins une de leurs extrémités à une ou plusieurs barres collectrices 10, 100.

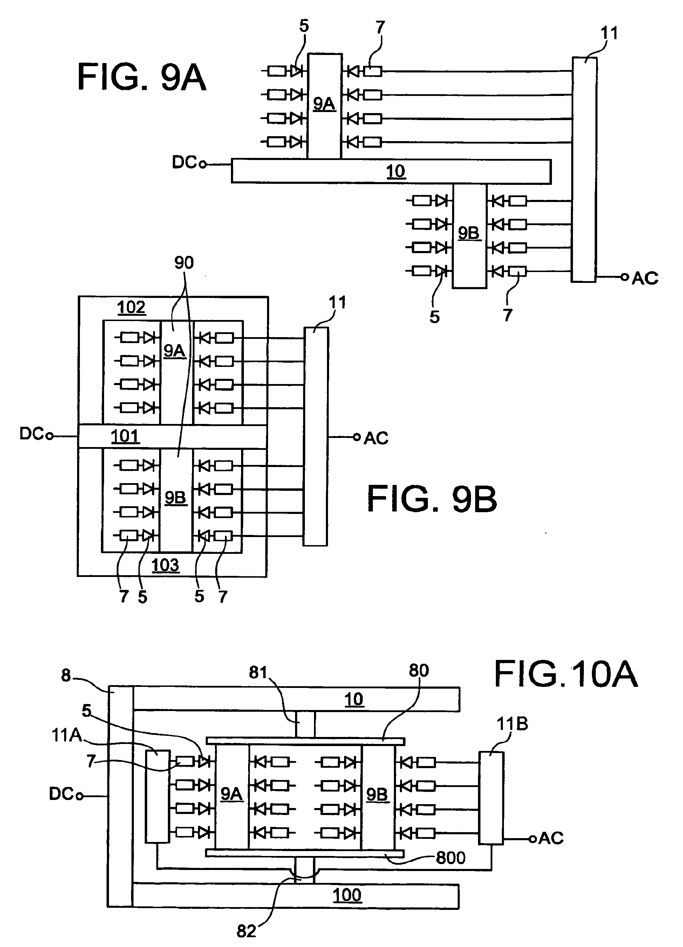

Dans un mode de réalisation, tel que représenté en figure 7, les barres collectrices 10, 100 peuvent former un cadre 8 entourant les barres composant 9A, 9B. Le cadre peut n'avoir que trois côtés comme sur les figures 7, 10, 12 ou bien quatre comme sur la figure 9B. Les barres collectrices 10, 100 sont fixées aux deux extrémités de chacune des barres composant 9A, 9B et sont reliées entre elles. Dans une variante (figure 8), les barres composant 9A, 9B peuvent être positionnées d'un même côté d'une unique barre collectrice 10. Chaque barre composant 9A, 9B est reliée par une extrémité à une barre collectrice 10, l'autre extrémité peut être libre ou reliée à une seconde barre collectrice 100.

Dans la configuration de la figure 7, les courants parcourant les barres collectrices 10, 100 ont une même polarité ce qui fait que le champ magnétique au voisinage des composants monodirectionnels 5 situés aux extrémités des barres composant 9A, 9B est plus intense que le champ magnétique au niveau des composants monodirectionnels 5 médians. Les composants monodirectionnels 5 extrêmes sont plus chargés en courant que les composants monodirectionnels 5 médians.

Dans un autre mode de réalisation, les barres composant 9A, 9B peuvent être situées de part et d'autre d'une barre collectrice centrale 101 (figure 9A). Les deux barres composant 9A, 9B sont distinctes et sont décalées l'une par rapport à l'autre au niveau de leur liaison à la barre collectrice centrale. Dans certains cas (figure 9B), deux barres composant 9A, 9B peuvent être assemblées par une de leur extrémité avec une barre collectrice centrale 101. Les deux barres composant 9A, 9B sont ainsi dans le prolongement l'une de l'autre. De plus, des barres collectrices supplémentaires 102, 103 sont prévues aux autres extrémités des barres composant 9A, 9B non fixées à la barre collectrice centrale 101. Ces barres collectrices supplémentaires 102, 103 sont alors reliées à la barre collectrice centrale 101 de façon à former un cadre 8 autour des barres composant 9A, 9B. Cela permet aux barres composant 9A, 9B d'évacuer tout courant transmis depuis les composants monodirectionnels 5 (diodes ou thyristors) par deux extrémités au lieu d'une seule, les deux extrémités des barres composant 9A, 9B étant reliées à une barre collectrice 101, 102, 103.

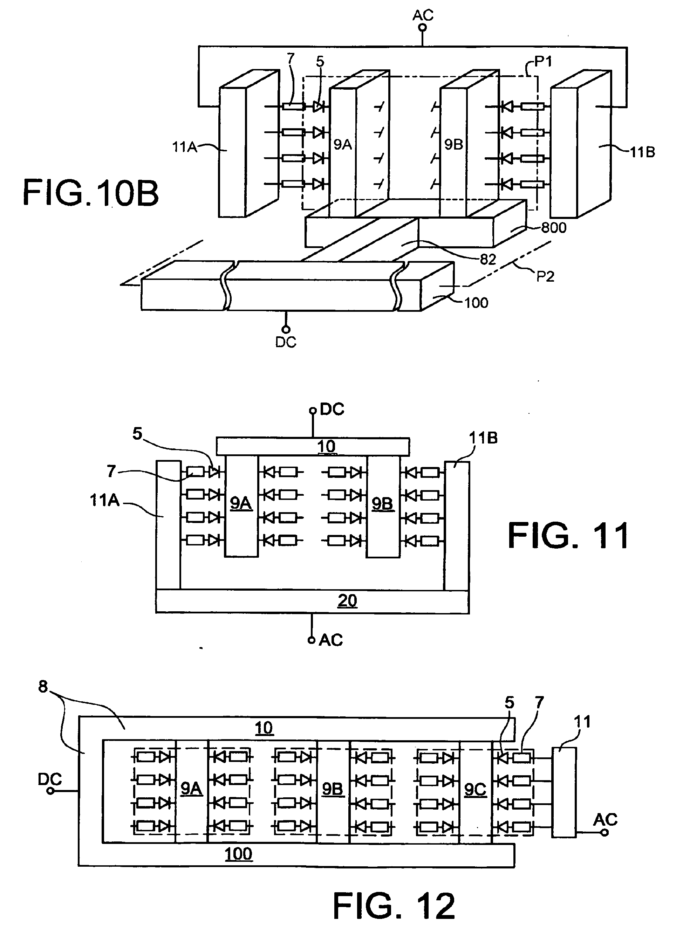

Dans encore un autre mode de réalisation, illustré aux figures 10A, 10B, les barres composant 9A, 9B d'un même bras redresseur peuvent être reliées ensemble par une ou deux extrémités au moyen d'une barre conductrice dite barre de liaison 80, 800. Les barres de liaison 80, 800 se différencient des barres collectrices en ce qu'elles sont propres à un unique bras redresseur. De plus, elles ne sont pas traversées par un courant issu d'une autre phase ou passant par une autre borne AC que celle à laquelle est relié le bras redresseur, au contraire des barres collectrices 10, 100. Les barres composant 9A, 9B sont distinctes.

La ou les barres de liaisons 80, 800 sont elles-mêmes reliées, chacune par un unique conducteur 81, 82, à une unique barre collectrice 10, 100. S'il y a deux barres de liaison 80, 800, il s'entend qu'elles sont reliées à deux barres collectrices 10, 100 différentes qui sont elles-mêmes reliées entre elles et à la borne DC. Dans les deux cas, chaque barre collectrice 10, 100 est écartée de la barre de liaison 80, 800 à laquelle elle est reliée. Cet écartement est dû à la présence du conducteur 81, 82 disposé en travers qui les éloigne l'une de l'autre. Les barres collectrices 10, 100 et les barres de liaison 80, 800 sont sensiblement parallèles. Un conducteur 81, 82 est sensiblement perpendiculaire à la barre collectrice et à la barre de liaison qu'il relie. Un avantage de l'écartement est qu'il permet d'obtenir une bonne compacité. Les conducteurs 81, 82 peuvent prendre la forme de barres conductrices appelées encore barres d'écartement.

Comme illustré sur la figure 10B, les barres composant 9A, 9B s'étendent dans un même plan P1. Une barre collectrice 10 et le conducteur 81 qui lui est associé s'étendent dans un même autre plan P2, ces deux plans P1, P2 étant sensiblement perpendiculaires. La figure 10B est partielle, elle ne montre que la barre collectrice 100 et le conducteur 82 et la barre de liaison 800. L'autre barre collectrice 10, l'autre barre de liaison 80 et le conducteur 81 sont omis pour ne pas surcharger la figure. Dans le même but, la figure 10B ne montre, pour chaque ensemble de composants, qu'une partie des composants et pas la totalité.

On dispose, de préférence, un conducteur 81, 82 sensiblement au milieu de la barre de liaison 80, 800 à laquelle il est fixé.

Grâce à la présence des barres de liaison, des barres d'écartement et des barres collectrices écartées agencées comme décrit aux figures 10A, 10B, le champ magnétique au voisinage des composants monodirectionnels 5 extrêmes est moins intense que dans la configuration de la figure 7 par exemple dans laquelle les barres composant sont directement reliées aux barres collectrices. En conséquence, les composants monodirectionnels 5 extrêmes sont moins chargés en courant, ce qui conduit à un meilleur équilibrage des composants monodirectionnels reliés à une même barre composant. Le champ magnétique au niveau d'une zone sensiblement centrale des barres de liaison est localement faible, cela est dû à des courants de polarités opposées dans la barre de liaison.

Ce mode de réalisation permet que tout courant issu d'une borne AC donnée et arrivant sur une borne DC traverse une même impédance due à la barre collectrice 10, 100 indépendamment de la barre composant 9A, 9B traversée. En effet, dans les autres modes de réalisation, si la borne DC est située à droite ou à gauche des barres composant 9A, 9B, une des barres composant 9A est plus proche de la borne DC que l'autre barre composant 9B (cf. figure 7). Dans le mode de réalisation illustré aux figures 10A, 10B, que le courant arrive par les composants monodirectionnels 5 reliés à l'une des barres composant 9A ou par les composants monodirectionnels 5 reliés à une autre barre composant 9B, le courant perçoit une même impédance due aux barres de liaisons 80, 800, au cadre 8 comportant les barres collectrices 10, 100 et aux conducteurs 81, 82.

Enfin, dans un dernier mode de réalisation, illustré en figure 11, plusieurs barres fusible 11A, 11B permettent de relier les groupes fonctionnels (composant monodirectionnel 5/fusible 7) à la borne AC. Il y a au moins autant de barres fusible 11A, 11B que de barres composant 9A, 9B de façon à ce que les composants monodirectionnels 5 reliés électriquement à une même barre composant 9A, 9B soient reliés à la borne AC par une même barre fusible 11A, 11B et vice-versa. Une barre conductrice, dite barre de répartition 20, relie la borne AC aux différentes barres fusible 9A, 9B. Ce mode de réalisation permet de s'affranchir d'un déséquilibre avant/arrière.

Un ensemble de liaisons électriques, dit liaison électrique, relie respectivement la barre fusible à un fusible, ledit fusible à un composant monodirectionnel et ledit composant monodirectionnel à la barre composant. Cette liaison électrique définit, pour un groupe fonctionnel, une résistance de liaison.

La présence de multiples barres composants 9A, 9B induit une séparation des composants monodirectionnels 5 en de multiples ensembles de composants. Comme décrit plus haut, en lien avec la figure 7, la présence des barres composants 9A, 9B induit la formation d'ensembles composant 71, 72 (référencés en figure 7). De plus, dans chaque ensemble composant, on peut généralement définir deux groupes de composants monodirectionnels 5 : un premier groupe de composants monodirectionnels 5 reliés à un côté de la barre composant 9A, 9B et un second groupe de composants monodirectionnels 5 reliés à un côté opposé de la barre composant 9A, 9B, comme cela est illustré en figure 6. Ces groupes seront appelés ensembles de barre.

De façon générale, au sein d'un même ensemble composant, respectivement au sein d'un même ensemble de barre, les liaisons électriques ont une résistance sensiblement identique. Cependant, pour des raisons structurelles, il se peut que les liaisons électriques soient différentes d'un ensemble composant, respectivement ensemble de barre, à l'autre. Cela induit des variations de résistance de liaison entre la borne AC et la barre composant selon que le courant passe par un ensemble composant donné, respectivement ensemble de barre, ou par un autre ensemble composant, respectivement ensemble de barre, donné.

Ainsi, il apparait un déséquilibre avant-arrière lorsque les liaisons électriques d'un ensemble composants, respectivement ensemble de barre, ont une résistance de liaison différente de celle d'un autre ensemble composant, respectivement ensemble de barre.

Sur la figure 11, on comprend bien que chaque barre fusible 11A, 11B est reliée à tous les groupes fonctionnels d'une barre composant 9A, 9B même si, pour des raisons de simplification, il n'est représenté un raccord qu'avec les fusibles situés le plus à l'extérieur du dessin.

Le mode de réalisation illustré en figure 11 préconise de créer autant que possible, une barre fusible 11A, 11B par ensemble de composants susceptible d'avoir une résistance de liaison différente d'un autre groupe. En effet, en positionnant une barre fusible par barre composant, les liaisons électriques ont des dimensions réduites, et donc moins de risque de former des résistances de liaison différentes. Si, pour des raisons structurelles, les ensembles de barre ont des résistances de liaisons différentes, le mode de réalisation illustré en figure 11 peut se généraliser. Il faut alors prévoir une barre de liaison 11A, 11B par ensemble de barre au lieu de prévoir uniquement une barre de liaison 11A, 11B par barre composant 9A, 9B.

Enfin, comme le montre la figure 12, il est possible d'utiliser le principe de l'invention pour avoir plus de deux barres composant. Dans cette figure il est représenté trois barres composant 9A, 9B, 9C.

L'invention est illustrée au moyen d'un convertisseur-redresseur à double pont de Graëtz triphasé, dit convertisseur-redresseur dodécaphasé. Il est évident, l'invention ayant trait à l'arrangement des composants monodirectionnels au sein d'un bras redresseur, que l'invention concerne également une adaptation des exemples donnés à des convertisseurs-redresseurs à n pont de Graëtz triphasé, n supérieur ou égale à 1 ou a pont de Graëtz monophasé.

## Revendications

1. Convertisseur redresseur à pont de Graëtz comportant plusieurs bornes alimentées en courant alternatif, dites bornes AC, et deux bornes aptes à alimenter en courant continu un circuit extérieur, dites bornes DC, et des bras redresseurs (U1+, U1-, V1+, V1-, W1+, W1-, U2+, U2-, V2+, V2-, W2+, W2-) reliant chaque borne AC à chaque borne DC, un bras redresseur étant situé entre une unique borne AC et une unique borne DC et il comporte de multiples composants électroniques monodirectionnels, dits composants monodirectionnels (5), montés en parallèle, reliés d'un côté à la borne DC au moyen d'un ensemble conducteur, dit ensemble composant, et d'un autre côté à la borne AC, pour au moins un bras redresseur (U1+, U1-, V1+, V1-, W1+, W1-, U2+, U2-, V2+, V2-, W2+, W2-), l'ensemble composant comportant plusieurs barres conductrices distinctes, dites barres composant (9A, 9B) ayant chacune au moins une extrémité reliée à la borne DC, les composants monodirectionnels (5) étant reliés aux barres composant (9A, 9B) et répartis entre elles en autant d'ensembles de composants (71, 72) montés en parallèle qu' il y a de barres composant (9A, 9B), **caractérisé en ce que** les barres composant (9A, 9B) d'un même bras redresseur sont reliées à une même barre de liaison (80, 800), chaque barre de liaison (80, 800) étant reliée par un unique conducteur (81, 82) à une unique barre collectrice (10, 100), le conducteur (81, 82) écartant la barre de liaison (80, 800) de la barre collectrice (10, 100).

2. Convertisseur redresseur à pont de Graëtz selon la revendication 1, dans lequel la liaison entre les composants monodirectionnels (5) et la borne AC se fait par un ensemble fusible qui comporte une résistance fusible (7), dite fusible, par composant monodirectionnel (5) relié d'un côté en série avec ledit composant monodirectionnel et de l'autre côté à au moins une barre fusible (11A, 11B) raccordée à la borne AC.

3. Convertisseur redresseur à pont de Graëtz selon la revendication 2, dans lequel les composants (5) assignés à une même barre composant (9A, 9B) sont reliés à une même barre fusible (11A, 11B).

4. Convertisseur redresseur à pont de Graëtz selon l'une des revendications 2 ou 3, dans lequel l'ensemble fusible comporte au moins une barre fusible (11A, 11B) par barre composant (9A, 9B), chaque barre fusible (11A, 11B) étant reliée électriquement aux composants (5) assignés à une unique barre composant (9A, 9B).

5. Convertisseur redresseur à pont de Graëtz selon la revendication 4, dans lequel plusieurs barres fusible (11A, 11B) sont reliées entre elles par une barre conductrice dite barre de répartition (20).

6. Convertisseur redresseur à pont de Graëtz selon l'une des revendications 1 à 5, dans lequel, pour chaque barre composant (9A, 9B), les composants (5) sont répartis en deux groupes, positionnés chacun d'un côté opposé de la barre composant (9A, 9B).

7. Convertisseur redresseur à pont de Graëtz selon l'une des revendications 1 à 6, dans lequel la barre collectrice (10, 100, 101) est fixée à une extrémité des barres composant (9A, 9B, 9C).

8. Convertisseur redresseur à pont de Graëtz selon l'une des revendications 1 à 7, dans lequel les barres composant (9A, 9B) distinctes sont situées d'un même côté d'une barre collectrice (10, 100).

9. Convertisseur redresseur à pont de Graëtz selon l'une des revendications 1 à 7, dans lequel les barres composant (9A, 9B) distinctes sont situées de part et d'autre d'une barre collectrice (10) centrale.

10. Convertisseur redresseur à pont de Graëtz selon l'une des revendications 1 à 9, dans lequel le conducteur (81, 82) est relié à la barre de liaison (80, 800) sensiblement au milieu de la barre de liaison (80, 800).

11. Convertisseur redresseur à pont de Graëtz selon l'une des revendications 1 à 10, dans lequel, les barres composant (9A, 9B) sont placées sensiblement dans un même plan (P1), le conducteur (81, 82) et la barre collectrice (10, 100) à laquelle il est relié sont disposés sensiblement dans un même autre plan (P2), les deux plans (P1, P2) étant sensiblement perpendiculaires.

12. Convertisseur redresseur multiphasé à pont de Graëtz selon l'une des revendications 1 à 11, comportant deux transformateurs, chaque transformateur étant reliée par des bornes AC (U1+, U1-, V1+, V1-, W1+, W1-, U2+, U2-, V2+, V2-, W2+, W2-) à un pont de Graëtz (R1, R2) qui lui est propre, les ponts de Graëtz (R1, R2) ayant chacun une borne DC positive et une borne DC négative reliées à un circuit à alimenter en courant continu, les ponts de Graëtz (R1, R2) ayant leur bornes DC positives communes et leurs bornes DC négatives communes.

**Patentansprüche**

1. Gleichrichter mit Graetz-Brücke, enthaltend mehrere mit Wechselstrom versorgte Anschlussklemmen, AC-Klemmen genannt, und zwei Anschlussklemmen, DC-Klemmen genannt, die dazu geeignet sind, einen äußeren Schaltkreis mit Gleichstrom zu versorgen, und Gleichrichterzweige (U1+, U1-, V1+, V1-, W1+, W1-, U2+, U2-, V2+, V2-, W2+, W2-), die jede AC-Klemme mit jeder DC-Klemme verbinden, wobei ein Gleichrichterzweig zwischen einer einzigen AC-Klemme und einer einzigen DC-Klemme liegt, sowie zahlreiche monodirektionale, elektronische Komponenten, monodirektionale Komponenten (5) genannt, die parallel geschaltet sind und auf einer Seite mit der DC-Klemme über eine Leiteranordnung, Komponentenanordnung genannt, und auf einer anderen Seite mit der AC-Klemme verbunden sind, für zumindest einen Gleichrichterzweig (U1+, U1-, V1+, V1-, W1+, W1-, U2+, U2-, V2+, V2-, W2+, W2-), wobei die Komponentenanordnung mehrere separate Stromschienen aufweist, Komponentenschienen (9A, 9B) genannt, die jeweils zumindest ein mit der DC-Klemme verbundenes Ende aufweisen, wobei die monodirektionalen Komponenten (5) mit den Komponentenschienen (9A, 9b) verbunden sind und in ebenso viele parallel geschaltete Komponentenanordnungen (71, 72) auf diese aufgeteilt sind, wie Komponentenschienen (9A, 9B) vorhanden sind, **dadurch gekennzeichnet, dass** die Komponentenschienen (9A, 9B) eines gleichen Gleichrichterzweigs mit einer gleichen Verbindungsschiene (80, 800) verbunden sind, wobei jede Verbindungsschiene (80, 800) über einen einzigen Leiter (81, 82) mit einer einzigen Sammelschiene (10, 100) verbunden ist, wobei der Leiter (81, 82) die Verbindungsschiene (80, 800) von der Sammelschiene (10, 100) beabstandet.

2. Gleichrichter mit Graetz-Brücke nach Anspruch 1, wobei die Verbindung zwischen den monodirektionalen Komponenten (5) und der AC-Klemme über eine Schmelzanordnung erfolgt, die pro monodirektionale Komponente (5) einen Schmelzwiderstand (7) aufweist, Schmelzsicherung genannt, die auf einer Seite in Reihe mit der monodirektionalen Komponente und auf der anderen Seite mit zumindest einer Schmelzschiene (11A, 11 B) verbunden ist, die an die AC-Klemme angeschossen ist.

3. Gleichrichter mit Graetz-Brücke nach Anspruch 2, wobei die Komponenten (5), die einer gleichen Komponentenschiene (9A, 9B) zugeordnet sind, mit einer gleichen Schmelzschiene (11A, 11 B) verbunden sind.

4. Gleichrichter mit Graetz-Brücke nach einem der Ansprüche 2 oder 3, wobei die Schmelzanordnung zumindest eine Schmelzschiene (11A, 11 B) pro Komponentenschiene (9A, 9B) aufweist, wobei jede Schmelzschiene (11A, 11 B) elektrisch mit den Komponenten (5) verbunden ist, die einer einzigen Komponentenschiene (9A, 9B) zugeordnet sind.

5. Gleichrichter mit Graetz-Brücke nach Anspruch 4, wobei mehrere Schmelzschienen (11A, 11 B) über eine Sammelschiene, Verteilungsschiene (20) genannt, untereinander verbunden sind.

6. Gleichrichter mit Graetz-Brücke nach einem der Ansprüche 1 bis 5, wobei für jede Komponentenschiene (9A, 9B) die Komponenten (5) in zwei Gruppen aufgeteilt sind, die jeweils auf einer entgegengesetzten Seite der Komponentenschiene (9A, 9B) positioniert sind.

7. Gleichrichter mit Graetz-Brücke nach einem der Ansprüche 1 bis 6, wobei die Sammelschiene (10, 100, 101) an einem Ende der Komponentenschienen (9A, 9B, 9C) befestigt ist.

8. Gleichrichter mit Graetz-Brücke nach einem der Ansprüche 1 bis 7, wobei die verschiedenen Komponentenschiene (9A, 9B) auf einer gleichen Seite einer Sammelschiene (10, 100) liegen.

9. Gleichrichter mit Graetz-Brücke nach einem der Ansprüche 1 bis 7, wobei die verschiedenen Komponentenschiene (9A, 9B) auf beiden Seiten einer mittigen Sammelschiene (10) liegen.

10. Gleichrichter mit Graetz-Brücke nach einem der Ansprüche 1 bis 9, wobei der Leiter (81, 82) mit der Verbindungsschiene (80, 800) im Wesentlichen in der Mitte der Verbindungsschiene (80, 800) verbunden ist.

11. Gleichrichter mit Graetz-Brücke nach einem der Ansprüche 1 bis 10, wobei die Komponentenschienen (9A, 9B) im Wesentlichen in einer gleichen Ebene (P1) angeordnet sind, wobei der Leiter (81, 82) und die Sammelschiene (10, 100), mit welcher er verbunden ist, im Wesentlichen in einer anderen gleichen Ebene (P2) angeordnet sind, wobei die beiden Ebenen (P1, P2) im Wesentlichen senkrecht zueinander sind.

12. Mehrphasen-Gleichrichter mit Graetz-Brücke nach einem der Ansprüche 1 bis 11, enthaltend zwei Transformatoren, wobei jeder Transformator über AC-Klemmen (U1+, U1-, V1+, V1-, W1+, W1-, U2+, U2-, V2+, V2-, W2+, W2-), mit einer ihm eigenen Graetz-Brücke (R1, R2) verbunden ist, wobei die Graetz-Brücken (R1, R2) jeweils eine positive DC-Klemme und eine negative DC-Klemme aufweisen, die mit einem mit Gleichstrom zu versorgenden Schaltkreis verbunden sind, wobei die Graetz-Brücken (R1, R2) ihre positiven DC-Klemmen gemeinsam haben und ihre negativen DC-Klemmen gemeinsam haben.

**Claims**

1. A Graëtz-bridge converter-rectifier including a plurality of terminals fed with alternating current, called AC terminals, and two terminals adapted to feed an exterior circuit with direct current, called DC terminals, rectifier arms (U1+, U1-, V1+, V1-, W1+, W1-, U2+, U2-, V2+, V2-, W2+, W2-) connecting each AC terminal to each DC terminal, a rectifier arm being situated between a single AC terminal and a single DC terminal, and comprising multiple unidirectional electronic components, called unidirectional components (5), connected in parallel and connected on one side to the DC terminal by means of a conductive component set, called component set, and on the other side to the AC terminal;
the component set for at least one rectifier arm (U1+, U1-, V1+, V1-, W1+, W1-, U2+, U2-, V2+, V2-, W2+, W2-) including a plurality of separate conductive component busbars, called component busbars (9A, 9B), each having at least one end connected to the DC terminal, the unidirectional components (5) being connected to the component busbars (9A, 9B) and divided into as many component sets (71, 72) connected in parallel as there are component busbars (9A, 9B), **characterized in that** the component busbars (9A, 9B) of a same rectifier arm connected to a same connecting busbar (80, 800), each connecting busbar (80, 800) being connected via a single conductor (81, 82) to a single collector busbar (10, 100), the conductor (81, 82) spacing the connecting busbar (80, 800) from the collector busbar (10, 100).

2. A Graëtz-bridge converter-rectifier according to claim 1, wherein the connection between the unidirectional components (5) and the AC terminal is effected by a fuse set, that includes a fuse resistor (7), called fuse, for each unidirectional component (5) connected on one side in series with said unidirectional component and on the other side to at least one fuse busbar (11A, 11B) connected to the AC terminal.

3. A Graëtz-bridge converter-rectifier according to claim 2, wherein the components (5) assigned to the same component busbar (9A, 9B) are connected to the same fuse busbar (11A, 11B).

4. A Graëtz-bridge converter-rectifier according to any one of claim 2 or claim 3, wherein the fuse set includes at least one fuse busbar (11A, 11B) for each component busbar (9A, 9B), each fuse busbar (11A, 11B) being electrically connected to the components (5) assigned to a single component busbar (9A, 9B).

5. A Graëtz-bridge converter-rectifier according to claim 4, wherein several fuse busbars (11A, 11B) are connected with each other by a conductive busbar called a distribution busbar (20).

6. A Graëtz-bridge converter-rectifier according to any one of claims 1 to 5, wherein, for each component busbar (9A, 9B), the components (5) are divided into two groups, each positioned on an opposite side of the component busbar (9A, 9B).

7. A Graëtz-bridge converter-rectifier according to any one of claims 1 to 6, wherein the collector busbar (10, 100, 101) is fixed to one end of the component busbars (9A, 9B, 9C).

8. A Graëtz-bridge converter-rectifier according to any one of claims 1 to 7, wherein the separate component busbars (9A, 9B) are situated on the same side of a collector busbar (10, 100).

9. A Graëtz-bridge converter-rectifier according to any one of claims 1 to 7, wherein the separate component busbars (9A, 9B) are situated on either side of a central collector busbar (10).

10. A Graëtz-bridge converter-rectifier according to any one of claims 1 to 9, wherein the conductor (81, 82) is connected to the connecting busbar (80, 800) substantially in the middle of the connecting busbar (80, 800).

11. A Graëtz-bridge converter-rectifier according to any one of claims 1 to 10, wherein the component busbars (9A, 9B) are situated substantially in the same plane (P1), the conductor (81, 82) and the collector busbar (10, 100) to which it is connected, are disposed in the same other plane (P2), the two planes (P1, P2) being substantially perpendicular.

12. A multi-phase Graëtz-bridge converter-rectifier according to any one of claims 1 to 11, including two transformers each connected by AC terminals (U1+, U1-, V1+, V1-, W1+, W1-, U2+, U2-, V2+, V2-, W2+, W2-) to a Graëtz bridge (R1, R2) specific to it, the Graëtz bridges (R1, R2) each having a positive DC terminal and a negative DC terminal connected to a direct current power supply circuit, the Graëtz bridges (R1, R2) having their positive DC terminals commoned and their negative DC terminals commoned.

**FIG. 1**

**FIG. 2**

FIG. 3

FIG. 4

FIG. 5

EP 2 638 572 B1

16

FIG. 6

FIG. 7

FIG. 8

FIG. 9A

FIG. 9B

FIG.10A

FIG.10B

FIG. 11

FIG. 12